# EUROPEAN PATENT APPLICATION

(11) **EP 3 480 983 A1**
(43) Date of publication of application: **08.05.2019**
(21) Application number: 17830228.7
(22) Date of filing: 31.03.2017
(51) Int. Cl.: H04L 1/00

(54) **DATA TRANSMISSION METHOD AND APPARATUS**

(30) Priority: 19.07.2016 CN 201610575547
(71) Applicant: Huawei Technologies Co., Ltd., Longgang District Shenzhen, Guangdong 518129 (CN)
(72) Inventor: WANG, Fanzhao, Shenzhen Guangdong 518129 (CN); CHEN, Rujie, Shenzhen Guangdong 518129 (CN); ZHENG, Kai, Shenzhen Guangdong 518129 (CN)
(74) Representative: Gill Jennings & Every LLP
(86) International application number: PCT/CN2017/078915
(87) International publication number: WO 2018/014588

(57) **Abstract**

The present invention provides a data transmission method, and the method includes: obtaining, by a transmit end according to a pre-obtained network status variable and a pre-obtained transmission success rate, a quantity of redundant data packets that need to be transmitted for a to-be-transmitted data packet; obtaining, by the transmit end, a redundant data packet scheduling method according to the quantity of redundant data packets; and sending, by the transmit end, a redundant data packet according to the redundant data packet scheduling method. According to the method, a redundant data packet can be adaptively scheduled, and not only a real-time transmission requirement is met but also a quantity of redundant data packets is minimized, so that network load is reduced.

## Description

### TECHNICAL FIELD

Embodiments of the present invention relate to the field of data transmission, and in particular, to data processing and data redundancy transmission.

### BACKGROUND

A basic policy specific to a packet loss in a network is a timeout-based retransmission mechanism in the TCP (Transmission Control Protocol, Transmission Control Protocol) protocol. A principle of the timeout-based retransmission mechanism is: when a packet is lost in the network, unacknowledged data is retransmitted by using the timeout-based retransmission mechanism. However, generally, a transmission interval is relatively large in this passive retransmission mechanism. Therefore, a technical problem of a high requirement of a real-time service for a delay cannot be resolved. In the prior art, a relatively advanced method for avoiding retransmission is to perform active redundancy transmission on data by using a linear network encoding technology. That is, when a data packet is to be transmitted, a redundant data packet of the to-be-transmitted data packet is transmitted at a relatively small specified time interval, so that the to-be-transmitted data packet is successfully transmitted.

However, in the prior art, a redundant data packet is unnecessarily transmitted, and consequently, network resources are wasted, and network congestion occurs. That is, when a to-be-sent data packet is successfully transmitted, the redundant data packet is still sent, and therefore, the network resources are wasted. In addition, timeout-based retransmission still needs to be performed on some data packets especially in a relatively poor network state, and as a result, a technical problem of real-time transmission cannot be resolved. Therefore, the prior art is applicable only to a service scenario in which user network resources are relatively rich and a delay requirement is not high, but cannot meet a service scenario with relatively few network resources and a high delay requirement. A differentiated QoS (Quality of Service, quality of service) service is not provided in the prior art.

### SUMMARY

The technical solutions provide a data transmission method and device, so as to provide a differentiated transmission service according to different data transmission requirements.

According to a first aspect, a data transmission method is provided, and the method includes: obtaining, by a transmit end according to a pre-obtained network status variable and a pre-obtained transmission success rate, a quantity of redundant data packets that need to be transmitted for a to-be-transmitted data packet; obtaining, by the transmit end, a redundant data packet scheduling method according to the quantity of redundant data packets; and sending, by the transmit end, a redundant data packet according to the redundant data packet scheduling method. The network status variable is one or more variables related to a current network congestion status. The network status variable includes but is not limited to: a packet loss rate in a network, an RTT (Round Trip Time, round trip time), a network bandwidth, a packet loss distribution model (uniformity, a period, and gauss), and the like. The transmission success rate is a rate of successfully receiving a data packet in the first time of transmission. The redundant data packet scheduling method is a scheduling method for transmitting a redundant data packet. For example, the redundant data packet scheduling method may include a method for sending n to-be-transmitted redundant data packets (n is greater than or equal to 0) in a specific manner (for example, the n to-be-transmitted redundant data packets may be transmitted at a specific time interval).

With reference to the first aspect, in a first possible implementation of the first aspect, the redundant data packet scheduling method includes any one or more of the following scheduling methods: a random degree policy, a shortest time scheduling method, a longest time scheduling method, or a uniform time scheduling method.

With reference to the first aspect, or the first possible implementation of the first aspect, in a second possible implementation of the first aspect, the obtaining, by the transmit end, a redundant data packet scheduling method specifically includes: obtaining, by the transmit end, a preset redundant data packet scheduling method according to the quantity of redundant data packets; or obtaining, by the transmit end, the redundant data packet scheduling method according to the quantity of redundant data packets and the network status variable.

With reference to any one of the first aspect, or the first to the second possible implementations of the first aspect, in a third possible implementation of the first aspect, before the obtaining, by the transmit end, a redundant data packet scheduling method, the transmission method further includes: obtaining, by the transmit end, a total transmission time of the redundant data packets according to a pre-obtained delay requirement; and the obtaining, by the transmit end, a redundant data packet scheduling method specifically includes: obtaining, by the transmit end, the redundant data packet scheduling method according to the total transmission time and the quantity of redundant data packets; or obtaining, by the transmit end, the redundant data packet scheduling method according to the network status variable, the total transmission time, and the quantity of redundant data packets.

With reference to any one of the first aspect, or the first to the third possible implementations of the first aspect, in a fourth possible implementation of the first aspect, the obtaining, by the transmit end, a total transmission time of the redundant data packets according to a pre-obtained delay requirement specifically includes: setting, by the transmit end according to the pre-obtained delay requirement, the total transmission time of the redundant data packets to a period of time less than or equal to the delay requirement.

With reference to any one of the first aspect, or the first to the fourth possible implementations of the first aspect, in a fifth possible implementation of the first aspect, the method further includes: obtaining, by the transmit end, a service type of to-be-transmitted data. The service type is an actual service type of the to-be-transmitted data. The service type includes but is not limited to: a control message, an online game, an online video, a video conference/a conference call, and the like. If the service type is the control message, it indicates that the service type of the to-be-transmitted data is the control message.

With reference to any one of the first aspect, or the first to the fifth possible implementations of the first aspect, in a sixth possible implementation of the first aspect, a method for obtaining the service type of the to-be-transmitted data by the transmit end includes at least one of the following methods: obtaining, by the transmit end, a default service type; obtaining, by the transmit end, a service type specified by an application; or obtaining, by the transmit end, the service type according to a data flow feature variable of the to-be-transmitted data. The data flow feature variable includes at least one of the following data feature related variables: a quantity of to-be-transmitted data packets in a cache of the transmit end and a length of the data packet, a quantity of data packets being transmitted in the network and a length of the data packet, an interval between arrival of data packets, data burst, or the like.

With reference to any one of the first aspect, or the first to the sixth possible implementations of the first aspect, in a seventh possible implementation of the first aspect, a method for obtaining the service type by the transmit end according to the data flow feature variable specifically includes at least one of the following methods: obtaining the service type according to at least one feature variable threshold; obtaining the service type according to at least one feature variable value; or obtaining the service type according to at least one feature variable threshold and/or at least one feature variable value by using an artificial intelligence algorithm.

With reference to any one of the first aspect, or the first to the seventh possible implementations of the first aspect, in an eighth possible implementation of the first aspect, the obtaining, by a transmit end according to a pre-obtained network status variable and a pre-obtained transmission success rate, a quantity of redundant data packets that need to be transmitted for a to-be-transmitted data packet specifically includes: obtaining, by the transmit end according to the pre-obtained network status variable, the pre-obtained transmission success rate, and the service type, the quantity of redundant data packets that need to be transmitted for the to-be-transmitted data packet.

With reference to any one of the first aspect, or the first to the eighth possible implementations of the first aspect, in a ninth possible implementation of the first aspect, the method further includes: obtaining, by the transmit end, a preprocessing method of the to-be-transmitted data packet according to the service type, where the preprocessing method is a method for processing the to-be-transmitted data packet before the data packet is transmitted, and the method includes encoding, combination, or division. The preprocessing method is a method for processing the to-be-transmitted data packet before the data packet is transmitted, and the method includes at least one of the following methods: encoding, combination, or division. Transmission efficiency of data of different service types can be improved by using different data packet preprocessing methods. A data packet preprocessing method may be automatically matched according to the service type by using an artificial intelligence method. The data packet preprocessing method includes but is not limited to a method for directly transmitting a sparse data packet and a method for performing network encoding on a non-sparse data packet. A data packet is a transmission unit.

With reference to any one of the first aspect, or the first to the ninth possible implementations of the first aspect, in a tenth possible implementation of the first aspect, before the sending, by the transmit end, a redundant data packet according to the redundant data packet scheduling method, the method further includes: sending, by the transmit end, the to-be-transmitted data packet according to the preprocessing method.

According to a second aspect, a data transmission device is provided, and the device includes a processor and a memory. The memory is configured to store a program; and the processor is configured to execute the program in the memory, so as to implement the following method: obtaining, according to a pre-obtained network status variable and a pre-obtained transmission success rate, a quantity of redundant data packets that need to be transmitted for a to-be-transmitted data packet; obtaining a redundant data packet scheduling method according to the quantity of redundant data packets; and sending a redundant data packet according to the redundant data packet scheduling method.

With reference to the second aspect, in a first possible implementation of the second aspect, the redundant data packet scheduling method includes any one or more of the following scheduling methods: a random degree policy, a shortest time scheduling method, a longest time scheduling method, or a uniform time scheduling method.

With reference to the second aspect, or the first possible implementation of the second aspect, in a second possible implementation of the second aspect, the obtaining a redundant data packet scheduling method specifically includes: obtaining a preset redundant data packet scheduling method according to the quantity of redundant data packets; or obtaining the redundant data packet scheduling method according to the quantity of redundant data packets and the network status variable.

With reference to any one of the second aspect, or the first to the second possible implementations of the second aspect, in a third possible implementation of the second aspect, before the obtaining a redundant data packet scheduling method, the method further includes: obtaining a total transmission time of the redundant data packets according to a pre-obtained delay requirement; and the obtaining a redundant data packet scheduling method specifically includes: obtaining the redundant data packet scheduling method according to the total transmission time and the quantity of redundant data packets; or obtaining the redundant data packet scheduling method according to the network status variable, the total transmission time, and the quantity of redundant data packets.

With reference to any one of the second aspect, or the first to the third possible implementations of the second aspect, in a fourth possible implementation of the second aspect, the obtaining a total transmission time of the redundant data packets according to a pre-obtained delay requirement specifically includes: setting, according to the pre-obtained delay requirement, the total transmission time of the redundant data packets to a period of time less than or equal to the delay requirement.

With reference to any one of the second aspect, or the first to the fourth possible implementations of the second aspect, in a fifth possible implementation of the second aspect, the method implemented by the processor further includes: obtaining a service type of to-be-transmitted data, where the service type is an actual service type of the data.

With reference to any one of the second aspect, or the first to the fifth possible implementations of the second aspect, in a sixth possible implementation of the second aspect, a method for obtaining the service type of the to-be-transmitted data includes at least one of the following methods: obtaining a default service type; obtaining a service type specified by an application; or obtaining the service type according to a data flow feature variable of the to-be-transmitted data.

With reference to any one of the second aspect, or the first to the sixth possible implementations of the second aspect, in a seventh possible implementation of the second aspect, a method for obtaining the service type according to the data flow feature variable specifically includes at least one of the following methods: obtaining the service type according to at least one feature variable threshold; obtaining the service type according to at least one feature variable value; or obtaining the service type according to at least one feature variable threshold and/or at least one feature variable value by using an artificial intelligence algorithm.

With reference to any one of the second aspect, or the first to the seventh possible implementations of the second aspect, in an eighth possible implementation of the second aspect, the obtaining, according to a pre-obtained network status variable and a pre-obtained transmission success rate, a quantity of redundant data packets that need to be transmitted for a to-be-transmitted data packet specifically includes: obtaining, according to the pre-obtained network status variable, the pre-obtained transmission success rate, and the service type, the quantity of redundant data packets that need to be transmitted for the to-be-transmitted data packet.

With reference to any one of the second aspect, or the first to the eighth possible implementations of the second aspect, in a ninth possible implementation of the second aspect, the method implemented by the processor further includes: obtaining a preprocessing method of the to-be-transmitted data packet according to the service type, where the preprocessing method is a method for processing the to-be-transmitted data packet before the data packet is transmitted, and the method includes encoding, combination, or division.

With reference to any one of the second aspect, or the first to the ninth possible implementations of the second aspect, in a tenth possible implementation of the second aspect, before the sending a redundant data packet according to the redundant data packet scheduling method, the method further includes: sending the to-be-transmitted data packet according to the preprocessing method.

With reference to the summary, in embodiments of the present invention, a conventional transmission mode is improved at least in the following aspects, and significant beneficial effects are brought. (1) The service type is obtained, and different transmission methods are selected for data of different service types. (2) The quantity of redundant data packets is adaptively adjusted, so that not only network congestion, bandwidth waste, or the like due to excessive redundant data packets but also a large transmission delay due to an extremely small quantity of redundant data packets is avoided. (3) The total transmission time of the redundant data packets may be adjusted, so that different delay requirements of different services are ensured. (4) The redundant data packet scheduling method may be adaptively adjusted, and multiple QoS (Quality of Service, quality of service) services (such as a minimum delay, a minimum redundancy transmission quantity, a moderate delay, and a moderate redundancy transmission quantity) are provided. In conclusion, the embodiments of the present invention provide an adaptive and personalized transmission method, and network resources are optimized by using the method.

### BRIEF DESCRIPTION OF DRAWINGS

To describe the technical solutions in the embodiments of the present invention or in the prior art more clearly, the following briefly introduces the accompanying drawings required for describing the embodiments. Apparently, the accompanying drawings in the following description show some embodiments of the present invention, and a person of ordinary skill in the art may still derive other drawings from these accompanying drawings without creative efforts.
FIG. 1 is a schematic flowchart of performing redundancy transmission on a to-be-transmitted data packet by using a linear network encoding technology;
FIG. 2 is a schematic diagram of an application scenario for implementing Embodiment 2 of the present invention;
FIG. 3 is a schematic architecture diagram of a network element for implementing Embodiment 3 of the present invention;
FIG. 4 is a schematic principal diagram of an architecture of a data transmission method according to Embodiment 3 of the present invention;
FIG. 5 is a schematic interaction diagram of a data transmission method according to Embodiment 4 of the present invention;
FIG. 6 is a schematic flowchart of a data transmission method according to an embodiment of the present invention; and
FIG. 7 is a schematic structural diagram of a transmission device according to Embodiment 8 of the present invention.

### DESCRIPTION OF EMBODIMENTS

To make the objectives, technical solutions, and advantages of the embodiments of the present invention clearer, the following clearly and completely describes the technical solutions in the embodiments of the present invention with reference to the accompanying drawings in the embodiments of the present invention. Apparently, the described embodiments are some but not all of the embodiments of the present invention. All other embodiments obtained by a person of ordinary skill in the art based on the embodiments of the present invention without creative efforts shall fall within the protection scope of the present invention.

The terms used in the embodiments of the present invention are merely for the purpose of illustrating specific embodiments, and are not intended to limit the embodiments of the present invention. The terms "a", "said" and "the" of singular forms used in the embodiments and the appended claims of the present invention are also intended to include plural forms, unless otherwise specified in the context clearly. It should also be understood that, the term "and/or" used herein indicates and includes any or all possible combinations of one or more associated listed items. It should be further understood that the term "include" adopted in the specification specifies presence of features, integers, steps, operations, elements and/or components, with presence or attachment of other features, integers, steps, operations, components, elements, and their combinations not excluded.

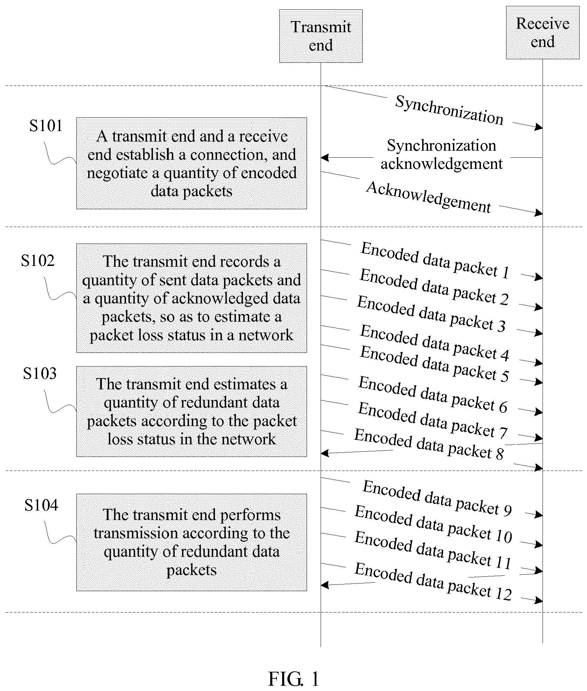

In the prior art, a relatively advanced method for avoiding retransmission is to perform active redundancy transmission on TCP data by using a linear network encoding technology, so that a timeout-based retransmission rate is reduced. FIG. 1 is a schematic flowchart of performing redundancy transmission on a to-be-transmitted data packet by using a linear network encoding technology. As shown in FIG. 1, the method includes the following steps.

S101. A transmit end and a receive end establish a data connection, and negotiate a quantity of encoded data packets.

S102. The transmit end performs linear network encoding on multiple to-be-sent data packets, and sends the multiple to-be-sent data packets. In a sending process, the transmit end records a quantity of sent data packets and a quantity of acknowledged data packets, so as to estimate a packet loss rate in a network.

S103. The transmit end estimates a quantity of redundant data packets according to a packet loss status in the network. Specifically, the quantity of redundant data packets is set to a statistical average value in a current packet loss rate.

S104. The transmit end generates an encoded data packet according to the quantity of redundant data packets, and transmits the encoded data packet. In this step, the transmit end may further continue to record the quantity of sent data packets and the quantity of acknowledged data packets, so as to estimate a latest packet loss rate.

It can be learned from the foregoing method that, especially in a scenario in which there is a large quantity of to-be-transmitted data, if the to-be-transmitted data is relatively sparse (for example, the to-be-transmitted data is a control message), linear network encoding cannot be performed. Therefore, the foregoing method cannot be used. That is, in the foregoing method, different preprocessing policies (such as encoding, combination, and division of a data packet) cannot be adaptively applied according to different service types. In addition, real-time data transmission cannot be ensured by using the foregoing method. In many cases, especially when a network status changes (being relatively poor), timeout-based retransmission still needs to be performed to successfully transmit data. In the foregoing method, the transmit end performs redundancy transmission at a relatively small specified time interval. That is, even though a data packet is successfully transmitted, the transmit end still sends a redundant data packet, resulting in unnecessary redundancy. Therefore, the foregoing method is applicable only to a scenario in which a large quantity of data is transmitted in an environment in a good network status, and a moderate delay is required, but cannot be applicable to a scenario in which the network status is not good or relatively poor, and high real-time performance is required. The method cannot provide a differentiated QoS service.

### Embodiment 1

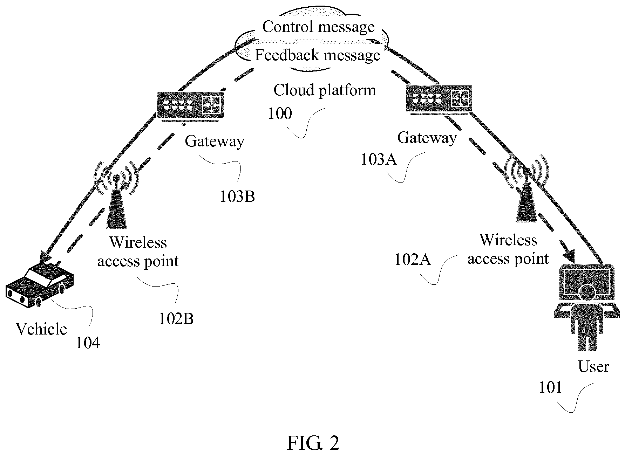

FIG. 2 shows an application scenario of an embodiment of the present invention. In this scenario, a user 101 accesses an Internet of Things cloud platform 100 by using a wireless access point 102A. A control message of the user 101 is delivered to a vehicle 104. After successfully receiving a command, the vehicle 104 feeds back receiving success information to the user 101, and automatically goes to a specified location. Messages such as a user control message in the Internet of Things are characterized by extreme sparseness. That is, only several data packets need to be transmitted in a long period of time. Because of the sparseness, these messages cannot trigger a fast retransmission mechanism in TCP. Once a data packet is lost, the data packet can be transmitted only by using a timeout-based retransmission mechanism in TCP. In addition, because of a relatively harsh radio channel environment, a control message can be successfully transmitted only in multiple times of timeout by using the TCP protocol, and consequently, a transmission delay of a data packet is greatly increased (for example, a maximum transmission delay tested in a current network may reach at least 60s). According to the method provided in this embodiment of the present invention, adaptive active redundancy transmission is provided according to a network status and a service type, so that a timeout-based retransmission rate in TCP can be exponentially reduced, and real-time transmission of the control message can be ensured.

The control message of the user needs to be sent to the cloud platform 100 for further processing and forwarding. An increasing quantity of users is accompanied with a corresponding increase in load of the cloud platform 100. Therefore, a reasonable quantity of redundant data packets is necessary for reducing the load of the cloud platform 100, and further increasing a quantity of users who can be carried. According to the method provided in this embodiment of the present invention, different preprocessing methods and different redundant data packet scheduling methods may be applied according to different service type features (such as a data packet size or a time interval between arrival of data packets), so as to ensure a reasonable quantity of redundant data packets and a reasonable transmission interval.

In addition to the foregoing Internet of Things scenario, the method provided in this embodiment of the present invention may be used in another scenario with a low delay requirement, such as an online game, real-time keepalive information transmission between data centers, or robot control. In future, the method provided in this embodiment of the present invention may be further used in virtual reality, real-time transfer of motion sensing information in holographic projection, and the like.

### Embodiment 2

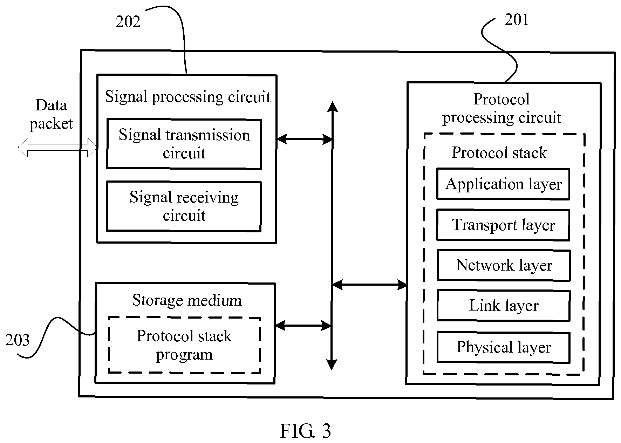

Referring to the application scenario in Embodiment 1, Embodiment 2 of the present invention provides multiple real network element architectures. This embodiment of the present invention is implemented by changing a protocol stack in a current network element. The network element may be any device supporting the TCP protocol such as a general-purpose computer (including a processor and a memory), a terminal device, or a server. A schematic architecture diagram of a network element is shown in FIG. 3. The network element includes a protocol processing circuit 201, a signal processing circuit 202, and a storage medium 203. The protocol processing circuit 201 is configured to process digital information. The signal processing circuit 202 is configured to process receiving and sending of a physical signal. The storage medium 203 is configured to store data and a program required in an information exchange process. The program may be understood as an instruction, code, software, a function, or the like. The storage medium 203 may be integrated into the protocol processing circuit 201 and/or the signal processing circuit 202, or may be independent of the protocol processing circuit 201 and/or the signal processing circuit 202. For example, when the network element is a software-defined radio platform, the network element includes a field programmable gate array (FPGA) and a signal processing circuit. A storage function of the network element is implemented by the field programmable gate array, and a protocol stack program is stored in the FPGA.

A specific function of the protocol processing circuit 201 includes data processing and/or sending. The protocol processing circuit 201 sends a control message to control data access and storage and control another device to perform an operation. The protocol processing circuit 201 may be implemented by using one or more structures that may be used for program execution. The protocol processing circuit 201 includes but is not limited to a field programmable gate array (FPGA), an application-specific integrated circuit (ASIC), a digital signal processor (DSP), a general purpose processor (CPU), or another programmable logic component.

The storage medium 203 may include one or a combination of multiple mediums that can be read by a computer or stored in a computer, for example, an optical storage medium (such as a digital versatile disc (DVD)), a magnetic storage device (such as a magnetic stripe or a floppy disk), a random access memory (RAM), a read-only memory (ROM), a programmable ROM (PROM), an erasable PROM (EPROM), a register, a smart card, or a flash device.

The signal processing circuit 202 is responsible for processing the physical signal, and includes modules for physical signal capturing, power amplification, radiation, analog-to-digital conversion, digital-to-analog conversion, and the like. These circuits and/or programs may be used to implement bidirectional communication between a network element and one or more network elements.

The protocol stack is used to implement a network protocol of each layer. The protocol stack includes a physical layer, a data link layer, a network layer, a transport layer, and an application layer. A function of the protocol stack is implemented by a protocol stack program. The protocol stack program is stored in the storage medium 203, and is executed by the protocol processing circuit 201. Some or all steps of this embodiment of the present invention are specifically implemented by using the protocol stack. In this embodiment of the present invention, the protocol stack program that runs in a hardware device of the network element is mainly improved. It should be understood that, this improvement may be implemented in the transport layer of the protocol stack, or may be implemented in the data link layer of the protocol stack.

According to this embodiment of the present invention, the protocol stack program is improved, so that adaptive adjustment is implemented, and real-time transmission and a low redundancy rate are ensured.

### Embodiment 3

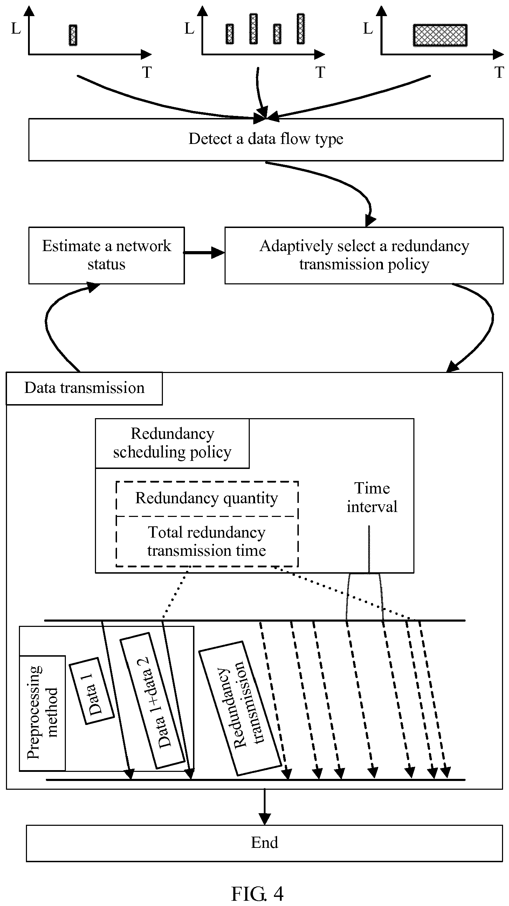

Referring to the application scenario in Embodiment 1 and the hardware architecture in Embodiment 2, as shown in FIG. 4, FIG. 4 is a schematic principal diagram of an architecture of a data transmission method according to Embodiment 3 of the present invention.

When data needs to be transmitted, an application directly specifies a service type of data that is to be transmitted by a transmit end, or a transmit end obtains a service type of to-be-transmitted data according to a data flow feature variable, or a transmit end may obtain a preset service type.

The transmit end obtains a corresponding delay requirement according to the service type, and sets a total transmission time of redundant data packets of each data packet to a period of time related to the delay requirement.

The transmit end calculates a quantity of redundant data packets of each data packet according to an obtained network status variable, the service type, and a transmission success rate. If the transmit end considers that a network status is unknown because the network status is not updated in time or is rarely updated, a redundancy quantity is calculated by using a default network status variable. Generally, the transmit end may obtain a real network environment by means of multiple times of data packet transmission and by collecting statistics about the network status variable.

The transmit end obtains a corresponding preprocessing method according to the service type, and processes the to-be-transmitted data.

The transmit end obtains a redundancy scheduling method according to the total transmission time and the quantity of redundant data packets.

The transmit end performs transmission according to the preprocessing method and the redundancy scheduling method.

In a sending process, the transmit end obtains the network status variable according to a transmission status and an acknowledgement status of the data packet, and uses the network status variable in time to calculate the quantity of redundant data packets.

It can be understood that, based on the steps above, this embodiment of the present invention may further include the following steps: before the transmission, the transmit end obtains a default specified network status variable such as a packet loss rate, an RTT, or a bandwidth; and/or the transmit end specifies a default service performance requirement that includes but is not limited to the transmission success rate, the delay requirement, or the like.

It can be understood that, in this embodiment of the present invention, the transmit end may use a special service type "no service type" to indicate that the service type does not need to be determined. That is, it may be considered that the service type does not need to be obtained in this embodiment of the present invention. When the service type is not obtained, the delay requirement may use a default value, or there is no specific delay requirement, that is, the delay requirement does not need to be obtained.

According to the architecture of the transmission method provided in this embodiment of the present invention, the data packet preprocessing method and the redundant data packet scheduling method may be dynamically adjusted according to the service type and the network status, so that not only real-time transmission of data of different service types is ensured but also network load is minimized.

### Embodiment 4

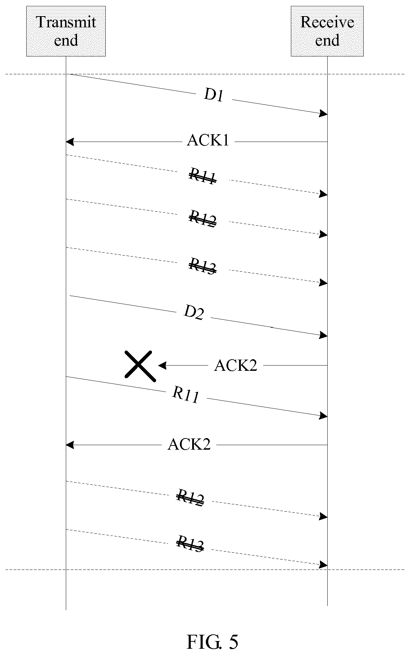

Referring to the method architecture and the principle in Embodiment 3 of the present invention, Embodiment 4 of the present invention provides a specific application scenario. FIG. 5 is a schematic interaction diagram of a data transmission method according to Embodiment 4 of the present invention. As shown in FIG. 5, a transmit end sends a control command to a receive end, and the receive end immediately feeds back an ACK (Acknowledgment, acknowledgement) after receiving the command. Before sending data, the transmit end learns that a service type of the to-be-transmitted data is a control message. The transmit end needs to send two control messages, that is, a data packet D1 and a data packet D2. The method may be implemented by a transport layer of the transmit end. The transmit end learns, according to the service type, that a total transmission time of redundant data packets is two seconds. The transmit end learns, by means of calculation according to a current network status variable and the service type, that a theoretical redundancy quantity of three is required to ensure a transmission success rate of 99.99%. The transmit end learns, according to the service type, the total transmission time of redundant data packets, and a quantity of redundant data packets, that a current preprocessing method is direct transmission, and a redundant data packet scheduling method is randomly sending the three redundant data packets within the total transmission time.

The transmit end successfully sends the first data packet D1, and the receive end successfully acknowledges correct receiving of D1. Therefore, the transmit end stops, in time, sending a redundant data packet. That is, the transmit end no longer sends redundant data packets R11, R12, and R13 according to a previous redundant data packet scheduling method.

The transmit end continues to send the second data packet D2, and sends a redundant data packet according to the previously determined redundant data packet scheduling method or a redundant data scheduling method that is re-obtained according to a current network status. If D2 is not acknowledged before the redundant data packet is transmitted for the first time, the transmit end sends a redundant data packet R21. Before the redundant data packet is sent for the second time, R21 is successfully acknowledged. Therefore, the transmit end cancels transmission of a redundant data packet subsequent to the redundant data packet R21.

According to this embodiment of the present invention, a strategy of sending a redundant data packet may be adjusted in time according to the current network status, so that not only transmission quality is ensured but also transmission of the redundant data packet and network load are reduced.

### Embodiment 5

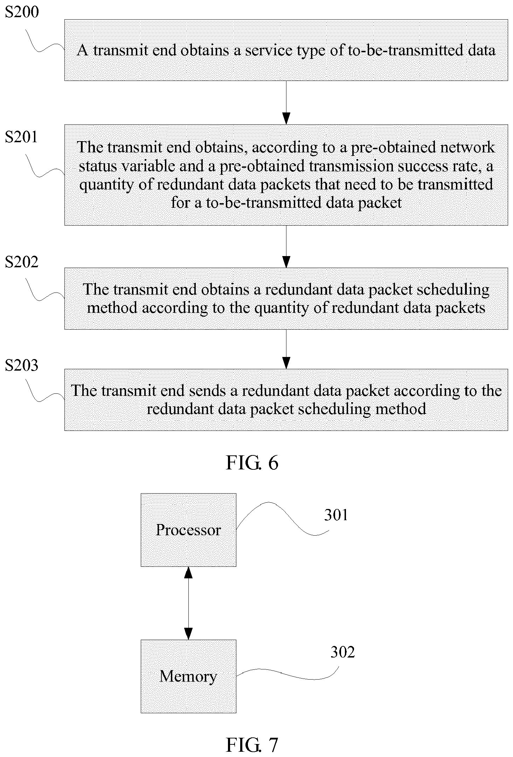

Referring to Embodiment 4 and Embodiment 3, FIG. 6 is a schematic flowchart of a data transmission method according to Embodiment 5 of the present invention. As shown in FIG. 6, the method includes the following steps.

S201. A transmit end obtains, according to a pre-obtained network status variable and a pre-obtained transmission success rate, a quantity of redundant data packets that need to be transmitted for a to-be-transmitted data packet.

It should be understood that, the network status variable may be obtained in real time. In some cases, for example, when a network status is not updated in time or is rarely updated, the quantity of redundant data packets may be calculated by using a default network status variable preset by the transmit end.

The transmission success rate may be obtained by the transmit end in real time, or may be a default value preset by the transmit end.

Obtaining the quantity of redundant data packets means that the transmit end obtains, by means of calculation according to the network status variable and the transmission success rate, a minimum quantity of redundant data packets that need to be transmitted to meet the transmission success rate.

The transmit end dynamically adjusts the quantity of redundant data packets according to the network status variable and the pre-obtained transmission success rate, so that not only a data transmission delay and a data redundancy quantity are reduced but also different QoS (Quality of Service, quality of service) services are provided in different network environments. This method is controllable, refined, and differentiated.

S202. The transmit end obtains a redundant data packet scheduling method according to the quantity of redundant data packets.

The redundant data packet scheduling method may include any one or more of the following scheduling methods: a random scheduling method, a shortest time scheduling method, a longest time scheduling method, or a uniform time scheduling method. The random time scheduling method means that a transmission time interval between n to-be-transmitted redundant data packets is randomly distributed. A time interval between transmission of a current redundant data packet and transmission of a next redundant data packet is a random period of time, for example, may be 1 ms or 10 ms. In an actual effect of this scheduling method, a redundancy quantity may be relatively high, but a technical problem can be avoided that a network device is heavily loaded because a large quantity of users simultaneously access a network. The shortest time scheduling method means that a time interval between transmission of a current redundant data packet and transmission of a next redundant data packet is a shortest time within a capability range of the transmit end. In an actual effect of this scheduling method, as small transmission delay as possible is ensured by using a maximum redundancy quantity. The longest time scheduling method is exactly opposite to the shortest time scheduling method. The uniform time scheduling method means that a time interval between transmission of each current redundant data packet and transmission of a next redundant data packet does not change. In an actual effect of this time scheduling method, a redundancy quantity and a delay time are balanced. The redundancy quantity in this scheduling method is less than that in the shortest time scheduling method, but an average delay in this scheduling method is greater than that in the shortest time scheduling method.

The transmit end may meet different delay requirements and redundancy quantity control in different network environments according to different redundant data packet scheduling methods and a network status, so as to provide a differentiated service.

The redundant data packet scheduling method may be obtained by the transmit end according to a preset default value, or may be obtained by the transmit end according to the network status variable by using a particular policy. The policy may be obtained by using a curve fitting method, a machine self-learning algorithm, or the like. For example, if determining, according to the network status variable, that a current network status is relatively poor, the transmit end transmits a redundant data packet according to a descending transmission method, so as to avoid network load caused by blind redundancy, and sends the redundant data packet by selecting the random time scheduling method.

The redundant data packet scheduling method may be obtained by the transmit end according to a total transmission time and the quantity of redundant data packets. The total transmission time may be obtained according to a pre-obtained delay requirement. The delay requirement may be a preset default value, or may be specified by an application. This is not limited in this embodiment of the present invention. For example, if the transmit end needs to transmit three redundant data packets within a total transmission time of 300 ms, the transmit end may select the random time scheduling method, and transmit the redundant data packets at respective intervals of 80 ms, 160 ms, and 60 ms; or may select the uniform time scheduling method, and transmit a redundant data packet every 100 ms. Certainly, when obtaining a scheduling method according to the total transmission time and the quantity of redundant data packets, the transmit end may further consider the network status variable, so as to obtain a more appropriate scheduling method. The total transmission time is a total period of time from starting of transmission of the first redundant data packet to ending of transmission of the last redundant data packet. Generally, the total transmission time is obtained according to the delay requirement. To ensure communication quality, a delay is generally reduced by setting the total transmission time to a period of time less than or equal to the delay requirement.

S203. The transmit end sends a redundant data packet according to the redundant data packet scheduling method.

When sending the redundant data packet according to the redundant data packet scheduling method, the transmit end may further obtain a network status variable of a current network in real time according to a transmission status and an acknowledgement status of the redundant data packet, and adjusts the redundant data packet scheduling method in real time according to the network status variable, so that an optimal transmission effect and a minimum redundancy quantity are implemented.

It should be understood that, optionally, the method may further include: S200. The transmit end obtains a service type of to-be-transmitted data, where the service type is an actual service type of the to-be-transmitted data.

That the transmit end obtains a service type of to-be-transmitted data may include: obtaining a default service type or obtaining a service type specified by an application. Application specification means that an application layer or application software directly specifies the service type of the to-be-transmitted data. In most cases, the transmit end may obtain the service type according to a data flow feature variable of the to-be-transmitted data.

The data flow feature variable includes at least one of the following data feature related variables: a quantity of to-be-transmitted data packets in a cache of the transmit end and a length of the data packet, a quantity of data packets being transmitted in the network and a length of the data packet, an interval between arrival of data packets, data burst, or the like. A method for obtaining the service type of the data packet according to the data flow feature variable includes but is not limited to: directly obtaining the service type according to one or more feature variable thresholds; or directly obtaining the service type according to one or more feature variable values; or obtaining the service type according to at least one feature variable threshold and/or at least one feature variable value by using an artificial intelligence algorithm such as machine learning or deep learning.

It should be understood that a sequence relationship among S200, S201, and S202 is not specifically limited, and S200 may be performed before or after S201 and/or S202. This is not limited in this embodiment of the present invention.

Optionally, when the method in this embodiment of the present invention includes step S200, S201 may further be: the transmit end obtains, according to the pre-obtained network status variable, the pre-obtained transmission success rate, and the service type, the quantity of redundant data packets that need to be transmitted for the to-be-transmitted data packet. In this case, obtaining the quantity of redundant data packets means that the transmit end obtains, by means of calculation according to the network status variable, the service type, and the transmission success rate, a minimum quantity of redundant data packets that need to be transmitted to meet the transmission success rate.

When the service type is obtained, the quantity of redundant data packets is obtained more specifically and differentially, so that a requirement of data of different service types for real-time transmission can be met to a maximum extent, network load can be minimized, and personalized and differentiated transmission can be implemented.

Optionally, when the method in this embodiment of the present invention includes step S200, the transmit end may further obtain a corresponding delay requirement according to the service type. Delay requirements of all service types may be different. For example, an online game has a high delay requirement, and a slightly increased delay greatly compromises user experience. In comparison with the online game, a delay requirement of video or music download is lower, and an occasionally increased delay does not greatly affect a user. Therefore, different delay requirements may be obtained according to different service types, so that a requirement of data with different service types for real-time transmission is met to a maximum extent, and network load is minimized.

Optionally, when the method in this embodiment of the present invention includes step S200, the method may further include: S2001. The transmit end obtains a preprocessing method of the to-be-transmitted data packet according to the service type. S2002. The transmit end sends the to-be-transmitted data packet according to the preprocessing method.

The preprocessing method is a method for processing the to-be-transmitted data packet before the data packet is transmitted, and the method includes at least one of the following methods: encoding, combination, or division. Transmission efficiency of data of different service types can be improved by using different data packet preprocessing methods. A data packet preprocessing method may be automatically matched according to the service type by using an artificial intelligence method. The data packet preprocessing method includes but is not limited to a method for directly transmitting a sparse data packet and a method for performing network encoding on a non-sparse data packet. A data packet is a transmission unit. It should be understood that, step S2002 is performed before step S203. If the to-be-transmitted data packet is successfully acknowledged, the redundant data packet does not need to be sent.

Referring to the method in S2001 and S2002, in this embodiment of the present invention, different transmission modes may be provided according to data of different service types, so that data of each service type is transmitted in a most appropriate transmission mode.

In conclusion, in this embodiment of the present invention, a conventional transmission mode is improved at least in the following aspects, and significant beneficial effects are brought. (1) The service type is obtained, and different transmission methods are selected for data of different service types. (2) The quantity of redundant data packets is adaptively adjusted, so that not only network congestion, bandwidth waste, or the like due to excessive redundant data packets but also a large transmission delay due to an extremely small quantity of redundant data packets is avoided. (3) The total transmission time of the redundant data packets may be adjusted, so that different delay requirements of different services are ensured. (4) The redundant data packet scheduling method may be adaptively adjusted, and multiple QoS (Quality of Service, quality of service) services (such as a minimum delay, a minimum redundancy transmission quantity, a moderate delay, and a moderate redundancy transmission quantity) are provided. In conclusion, this embodiment of the present invention provides an adaptive and personalized transmission method, and network resources are optimized by using the method.

### Embodiment 6

Referring to the method procedure in Embodiment 5 of the present invention, Embodiment 6 of the present invention provides specific application of a data transmission method. The method specifically includes the following steps.

S301. A transmit end obtains a default network status variable and a default service performance requirement. Specifically, a packet loss rate is 5%, an RTT (round trip time, round trip time) is 100 ms, a bandwidth is 512 kbps, a service type of to-be-transmitted data is a control message (that is, sparse data), a length of a data packet is 300 bytes, a delay requirement is 300 ms, and a transmission success rate is 99.99%.

S302. The transmit end learns that a total transmission time, that is, 200 ms, of redundant data packets is obtained by subtracting the RTT from the delay requirement (300 ms).

S303. A quantity of redundant data packets may be calculated according to the packet loss rate and the transmission success rate:
1-N^LR=SR, where LR indicates the packet loss rate, SR indicates the transmission success rate, and log indicates a logarithm operation.

Therefore,
N=log_LR(1-SR)=log_LR(1-99.99%)=-4/log(LR)=-4/log(5%)-1=2.07.

The transmit end cannot obtain a non-integer quantity of redundant data packets according to the service type of the to-be-transmitted data, that is, the control message by means of linear network encoding, and therefore, the quantity of redundant data packets is set to 3.

S304. The network bandwidth is less than 1 Mbps, the RTT≥100 ms, and the packet loss rate>1%. The transmit end determines, according to the foregoing network status variables, that a current network status is relatively poor, and transmits a redundant data packet according to a descending transmission method, so as to avoid network load caused by blind redundancy. Specifically, scheduling methods of three to-be-transmitted redundant data packets are randomly set to a value array, and the value array may be 60 ms, 110 ms, and 30 ms. This scheduling method is randomly generated, so that a case in which a network and a server are heavily loaded because a large quantity of users simultaneously access a cloud platform can be avoided.

S305. The transmit end transmits the redundant data packet according to the transmission scheduling method obtained in S304, so that the to-be-transmitted data can be successfully transmitted at a rate of 99.99% within 300 ms.

According to the data transmission method provided in this embodiment of the present invention, with reference to the service type of the to-be-transmitted data and the network status, not only data transmission that complies with service performance is ensured but also unnecessary redundancy is avoided to a maximum extent, so that network load and server load are reduced.

### Embodiment 7

Referring to Embodiment 6, a main difference between Embodiment 7 and Embodiment 6 of the present invention lies in that, in Embodiment 7, a service type is obtained according to a data flow feature variable, and a network status is obtained according to a transmission and receiving status of a data packet, and a specific application.

A transmit end obtains a service type of to-be-transmitted data according to the data flow feature variable by using a machine learning algorithm. For example, the transmit end learns that a data packet quantity is 1, transmission duration is less than Is, and a data packet size is less than 700 bytes. Therefore, the transmit end learns that the service type of the to-be-transmitted data is a control message.

The transmit end uses a minimum value of time differences between transmission and acknowledgement of multiple data packets as an RTT, and uses a ratio of a quantity of non-repeatedly sent data packets to a quantity of non-repeatedly received acknowledged data packets as a packet loss rate of a transmission cycle (the transmit end->a receive end->the transmit end).

According to Embodiment 7 of the present invention, the service type of the to-be-transmitted data is obtained by using the data flow feature variable, so that the to-be-transmitted data can be preprocessed more accurately according to an actual service type. A current network status can be obtained more accurately by obtaining a network status variable in real time. With reference to methods, procedures, or architectures provided in other embodiments of the present invention, not only data transmission that complies with a delay requirement can be better implemented but also a redundancy quantity can be minimized.

### Embodiment 8

FIG. 7 is a schematic structural diagram of a transmission device according to Embodiment 8 of the present invention. As shown in FIG. 7, the device includes a memory 302 and a processor 301. The memory 302 is similar to the storage medium 203 in Embodiment 2, and the processor 301 is similar to the protocol processing circuit 201 in Embodiment 2. The processor may execute a program stored in the memory, to implement the method in any one of Embodiments 3 to 7.

According to the device provided in this embodiment of the present invention, not only real-time transmission can be met but also network load can be reduced according to a user requirement by using an adaptive redundant data packet scheduling method and an adaptive data packet preprocessing method. The embodiment of the present invention provides an adaptive and personalized transmission method, and network resources are optimized by using the method.

In conclusion, the foregoing descriptions are only embodiments of the technical solutions of the present invention, but are not intended to limit the protection scope of the embodiments of the present invention. Any modification, equivalent replacement, or improvement made without departing from the spirit and principle of the embodiments of the present invention shall fall within the protection scope of the embodiments of the present invention.

## Claims

1. A data transmission method, wherein the method comprises:
obtaining, by a transmit end according to a pre-obtained network status variable and a pre-obtained transmission success rate, a quantity of redundant data packets that need to be transmitted for a to-be-transmitted data packet;
obtaining, by the transmit end, a redundant data packet scheduling method according to the quantity of redundant data packets; and
sending, by the transmit end, a redundant data packet according to the redundant data packet scheduling method.

2. The transmission method according to claim 1, wherein the redundant data packet scheduling method comprises any one or more of the following scheduling methods:
a random degree policy, a shortest time scheduling method, a longest time scheduling method, or a uniform time scheduling method.

3. The transmission method according to claim 1 or 2, wherein the obtaining, by the transmit end, a redundant data packet scheduling method specifically comprises:
obtaining, by the transmit end, a preset redundant data packet scheduling method according to the quantity of redundant data packets; or
obtaining, by the transmit end, the redundant data packet scheduling method according to the quantity of redundant data packets and the network status variable.

4. The transmission method according to any one of claims 1 to 3, wherein before the obtaining, by the transmit end, a redundant data packet scheduling method, the transmission method further comprises: obtaining, by the transmit end, a total transmission time of the redundant data packets according to a pre-obtained delay requirement; and
the obtaining, by the transmit end, a redundant data packet scheduling method specifically comprises:
obtaining, by the transmit end, the redundant data packet scheduling method according to the total transmission time and the quantity of redundant data packets; or
obtaining, by the transmit end, the redundant data packet scheduling method according to the network status variable, the total transmission time, and the quantity of redundant data packets.

5. The transmission method according to claim 4, wherein the obtaining, by the transmit end, a total transmission time of the redundant data packets according to a pre-obtained delay requirement specifically comprises:
setting, by the transmit end according to the pre-obtained delay requirement, the total transmission time of the redundant data packets to a period of time less than or equal to the delay requirement.

6. The transmission method according to any one of claims 1 to 5, wherein the method further comprises:
obtaining, by the transmit end, a service type of to-be-transmitted data, wherein the service type is an actual service type of the data.

7. The transmission method according to claim 6, wherein a method for obtaining the service type of the to-be-transmitted data by the transmit end comprises at least one of the following methods:
obtaining, by the transmit end, a default service type;
obtaining, by the transmit end, a service type specified by an application; or
obtaining, by the transmit end, the service type according to a data flow feature variable of the to-be-transmitted data.

8. The transmission method according to claim 7, wherein a method for obtaining the service type by the transmit end according to the data flow feature variable specifically comprises at least one of the following methods:
obtaining the service type according to at least one feature variable threshold;
obtaining the service type according to at least one feature variable value; or
obtaining the service type according to at least one feature variable threshold and/or at least one feature variable value by using an artificial intelligence algorithm.

9. The transmission method according to any one of claims 6 to 8, wherein the obtaining, by a transmit end according to a pre-obtained network status variable and a pre-obtained transmission success rate, a quantity of redundant data packets that need to be transmitted for a to-be-transmitted data packet specifically comprises:
obtaining, by the transmit end according to the pre-obtained network status variable, the pre-obtained transmission success rate, and the service type, the quantity of redundant data packets that need to be transmitted for the to-be-transmitted data packet.

10. The transmission method according to any one of claims 6 to 9, wherein the method further comprises:
obtaining, by the transmit end, a preprocessing method of the to-be-transmitted data packet according to the service type, wherein the preprocessing method is a method for processing the to-be-transmitted data packet before the data packet is transmitted, and the method comprises encoding, combination, or division.

11. The transmission method according to claim 10, wherein before the sending, by the transmit end, a redundant data packet according to the redundant data packet scheduling method, the method further comprises:
sending, by the transmit end, the to-be-transmitted data packet according to the preprocessing method.

12. A data transmission device, wherein the device comprises a processor and a memory;
the memory is configured to store a program; and
the processor is configured to execute the program in the memory, so as to implement the following method:
obtaining, according to a pre-obtained network status variable and a pre-obtained transmission success rate, a quantity of redundant data packets that need to be transmitted for a to-be-transmitted data packet;
obtaining a redundant data packet scheduling method according to the quantity of redundant data packets; and
sending a redundant data packet according to the redundant data packet scheduling method.

13. The transmission device according to claim 12, wherein the redundant data packet scheduling method comprises any one or more of the following scheduling methods:
a random scheduling method, a shortest time scheduling method, a longest time scheduling method, or a uniform time scheduling method.

14. The transmission device according to claim 12 or 13, wherein the obtaining a redundant data packet scheduling method specifically comprises:
obtaining a preset redundant data packet scheduling method according to the quantity of redundant data packets; or
obtaining the redundant data packet scheduling method according to the quantity of redundant data packets and the network status variable.

15. The transmission device according to any one of claims 12 to 14, wherein before the obtaining a redundant data packet scheduling method, the method further comprises obtaining a total transmission time of the redundant data packets according to a pre-obtained delay requirement; and
the obtaining a redundant data packet scheduling method specifically comprises:
obtaining the redundant data packet scheduling method according to the total transmission time and the quantity of redundant data packets; or
obtaining the redundant data packet scheduling method according to the network status variable, the total transmission time, and the quantity of redundant data packets.

16. The transmission device according to claim 15, wherein the obtaining a total transmission time of the redundant data packets according to a pre-obtained delay requirement specifically comprises:
setting, according to the pre-obtained delay requirement, the total transmission time of the redundant data packets to a period of time less than or equal to the delay requirement.

17. The transmission device according to any one of claims 12 to 16, wherein the method implemented by the processor further comprises:
obtaining a service type of to-be-transmitted data, wherein the service type is an actual service type of the data.

18. The transmission device according to claim 17, wherein a method for obtaining the service type of the to-be-transmitted data comprises at least one of the following methods:
obtaining a default service type;
obtaining a service type specified by an application; or
obtaining the service type according to a data flow feature variable of the to-be-transmitted data.

19. The transmission device according to claim 18, wherein a method for obtaining the service type according to the data flow feature variable specifically comprises at least one of the following methods:
obtaining the service type according to at least one feature variable threshold;
obtaining the service type according to at least one feature variable value; or
obtaining the service type according to at least one feature variable threshold and/or at least one feature variable value by using an artificial intelligence algorithm.

20. The transmission device according to any one of claims 12 to 19, wherein the obtaining, according to a pre-obtained network status variable and a pre-obtained transmission success rate, a quantity of redundant data packets that need to be transmitted for a to-be-transmitted data packet specifically comprises:
obtaining, according to the pre-obtained network status variable, the pre-obtained transmission success rate, and the service type, the quantity of redundant data packets that need to be transmitted for the to-be-transmitted data packet.

21. The transmission device according to any one of claims 17 to 20, wherein the method implemented by the processor further comprises:
obtaining a preprocessing method of the to-be-transmitted data packet according to the service type, wherein the preprocessing method is a method for processing the to-be-transmitted data packet before the data packet is transmitted, and the method comprises encoding, combination, or division.

22. The transmission device according to claim 21, wherein before the sending a redundant data packet according to the redundant data packet scheduling method, the method further comprises:
sending the to-be-transmitted data packet according to the preprocessing method.
